# EUROPÄISCHE PATENTANMELDUNG

(11) **EP 4 644 711 A1**
(43) Veröffentlichungstag der Anmeldung: **05.11.2025**
(21) Anmeldenummer: 25154706.3
(22) Anmeldetag: 29.01.2025
(51) Int. Cl.: F16B 37/04

(54) **VORRICHTUNG ZUR MONTAGEHILFE UND VORRICHTUNGSLEISTE**

(30) Priorität: 29.04.2024 DE 102024203988
(71) Anmelder: Siemens Mobility GmbH, 80997 München (DE)
(72) Erfinder: Baumann, Stefan, 86609 Donauwörth (DE); Krupa, Marcin, 90765 Fürth (DE); Worsch, Marcus, 91090 Effeltrich (DE)
(74) Vertreter: Siemens Patent Attorneys

(57) **Zusammenfassung**

Die Erfindung betrifft eine Vorrichtung zur Montagehilfe sowie eine Vorrichtungsleiste bestehend aus wenigstens zwei erfindungsgemäßen Vorrichtungen, wobei die Vorrichtung (1) mit wenigstens einer ersten (2) und einer, der ersten Seite (2) gegenüberliegenden zweiten (3) Seite und wenigstens einer, zwischen der ersten (2) und der zweiten (3) Seite durchgehenden Öffnung (5) zur Aufnahme wenigstens eines ersten Befestigungsmittels (15) ausgeführt ist und die wenigstens eine Öffnung (5) wenigstens einen ersten (7) und einen daran angrenzenden zweiten (9) Bereich aufweist, die derart ausgeführt sind, dass das wenigstens erste Befestigungsmittel (15) maximal bis zur Grenze der wenigstens zwei Bereiche (7, 9) in die wenigstens eine Öffnung (5) der Vorrichtung (1) einschiebbar ist, wobei sich das wenigstens erste Befestigungsmittel (15) wenigstens nach dem vollständigen Einschieben teilweise im ersten Bereich (7) und teilweise im zweiten Bereich (9) der Öffnung (5) befindet und wobei das wenigstens erste Befestigungsmittel (15) wenigstens mittels der Begrenzung (11) des ersten Bereichs (7) der Öffnung (5) in der Öffnung (5) der Vorrichtung (1) fixierbar ist.

## Beschreibung

Beim Zusammenbau von Fahrzeugen, insbesondere Schienenfahrzeugen sind regelmäßig beim Hinzufügen bzw. der Verbindung, insbesondere Verschraubung, von Anbauteilen zu bzw. an Fahrzeugen, die Verbindungsstellen in einer späten Montagephase nur noch von einer Seite, üblicherweise von vorne, nicht aber gleichzeitig auch von der Rückseite zugänglich, so dass bei der Befestigung, beispielsweise mit Schrauben etc., die entsprechenden Gegenstücke, insbesondere Muttern etc., manuell in der Regel nicht in der entsprechenden, notwendigen Einbaulage gehalten werden können. Hierzu werden zur Montagehilfe bisher üblicherweise Katalogteile, beispielsweise Käfigmuttern etc., oder gekantete, metallische Käfige verwendet, die eine entsprechende, dafür vorgesehene Nut am Anbauteil umgreifen und somit ein Festziehen der Verbindung(en) von Anbauteilen ermöglichen. In bestimmten Anbausituationen, wie z.B. beim Anbau von Dachschürzen von Fahrzeugen, insbesondere Schienenfahrzeugen, beispielsweise Straßenbahnen etc., kann dies jedoch zu einem Überschreiten der zulässigen Flächenpressung und in Folge somit zu einem Lösen der Schraubverbindung führen. Darüber hinaus müssen speziell bei Anwendungen im Außenbereich die verwendeten metallischen Käfige aufgrund der elektro-chemischen Spannungsreihe aufwändig vor Kontaktkorrosion geschützt werden, um entsprechende Probleme bei den Fahrzeugen und somit außerplanmäßige, kostenintensive Betriebsunterbrechungen zu Wartungs- und/oder Reparaturzwecken zu vermeiden.

Der Erfindung liegt die Aufgabe zugrunde, eine verbesserte Vorrichtung zur Montagehilfe sowie eine Vorrichtungsleiste anzugeben.

Gelöst wird die Aufgabe durch die Merkmale des unabhängigen Patentanspruchs 1 sowie des nebengeordneten Anspruchs 12. Weiterbildungen und Ausgestaltungen der Erfindung finden sich in den Merkmalen der abhängigen Patentansprüche wieder.

Dazu wird eine Vorrichtung zur Montagehilfe mit wenigstens einer durchgehenden Öffnung zur Aufnahme wenigstens eines ersten Befestigungsmittels angegeben, wobei die wenigstens eine Öffnung wenigstens einen ersten und einen daran angrenzenden zweiten Bereich aufweist, die derart ausgeführt sind, dass das wenigstens erste Befestigungsmittel maximal bis zur Grenze der wenigstens zwei Bereiche in die wenigstens eine Öffnung der Vorrichtung einschiebbar ist, wobei sich das wenigstens erste Befestigungsmittel wenigstens nach dem vollständigen Einschieben teilweise im ersten Bereich und teilweise im zweiten Bereich der Öffnung befindet und wobei das wenigstens erste Befestigungsmittel wenigstens mittels der Begrenzung des ersten Bereichs der Öffnung in der Öffnung der Vorrichtung fixierbar ist.

Die erfindungsgemäße Lösung ermöglicht auf einfache Weise, dass ein erstes Befestigungsmittel, beispielsweise eine Mutter etc., in die erfindungsgemäße Vorrichtung zur Montagehilfe eingeschoben und von der Vorrichtung, insbesondere der Begrenzung einer Öffnung der Vorrichtung, im Wesentlichen mittels Kraftschluss durch Haftreibung in der Vorrichtung gehalten bzw. fixiert werden kann. Die erfindungsgemäße Vorrichtung wird zur Montage, beispielsweise eines bzw. mehrerer Anbauteilen vor der Montage bevorzugt auf bzw. von der, bei bzw. nach der Montage unzugänglichen Seite der Anbauteile angebracht und hält somit das betreffende Befestigungsmittel, beispielsweise eine Mutter etc., sowohl bei der Montage als auch bei einer ggf. erforderlichen Demontage des bzw. der betreffenden Anbauteile in der jeweils benötigten bzw. vorgesehenen Einbaulage an der Ein- bzw. Anbaustelle, beispielsweise am betreffenden Fahrzeug etc., fest. Die Verwendung bzw. der Einsatz der erfindungsgemäßen Vorrichtung zur Montagehilfe ist dabei selbstverständlich nicht auf den Fahrzeugbereich beschränkt. Das Einschieben des Befestigungsmittels, beispielsweise einer Mutter etc., in die erfindungsgemäße Vorrichtung erfolgt dabei bevorzugt vor der eigentlichen Montage, bzw. in einer frühen Montagephase, bei der die erfindungsgemäße Vorrichtung bzw. die betreffenden Anbauteile noch von beiden Seiten zugänglich sind. Dadurch wird eine problemlose Verbindung, beispielsweise Verschraubung etc., des bzw. der Anbauteile an der bzw. den, dafür vorgesehenen Stelle(n), beispielsweise eines Fahrzeugs, insbesondere Schienenfahrzeugs etc., mittels eines, zum ersten Befestigungsmittel, beispielsweise einer Mutter etc., komplementären zweiten Befestigungsmittels, beispielsweise einer Schraube etc., ermöglicht, bei der, insbesondere beim Festziehen der Verbindung, beispielsweise Verschraubung durch Festdrehen einer Schraube in einer Mutter etc., ein Überschreiten der zulässigen Flächenpressung und somit auch ein Lösen der Verbindung, insbesondere Schraubverbindung, sicher vermieden werden kann.

Durch eine entsprechende geometrische Anpassung der erfindungsgemäßen Vorrichtung zur Montagehilfe, bevorzugt insbesondere der Begrenzung zumindest des ersten Bereichs der Öffnung der erfindungsgemäßen Vorrichtung, ist je nach Bedarf bzw. Anforderung die Verwendung bzw. das Einschieben aller möglichen und sinnvollen ersten Befestigungsmittel, beispielsweise Vierkant-Muttern, Sechskant-Muttern etc., möglich und von der erfinderischen Lösung umfasst.

Nach einer bevorzugten Ausführungsform der Erfindung weist die Vorrichtung wenigstens ein Verbindungsmittel auf. Dadurch kann die erfindungsgemäße Vorrichtung sehr leicht an der zur Montage vorgesehenen Stelle vor der eigentlichen Montage, beispielsweise an einem Anbauteil etc., fixiert werden. Bevorzugt weist die Vorrichtung zwei Verbindungsmittel auf, die bezüglich der zwischen ihnen befindlichen Öffnung der Vorrichtung symmetrisch gegenüberliegend angeordnet sind, wodurch die Fixierung der Vorrichtung zur Montagehilfe, beispielsweise an einem Anbauteil etc., besonders genau und stabil vorgenommen werden kann.

Nach einer weiteren bevorzugten Ausführungsform der Erfindung ist das wenigstens eine Verbindungsmittel flexibel. Besonders bevorzugt ist das wenigstens eine Verbindungsmittel eine Steckverbindung. Dadurch kann eine besonders schnelle Fixierung der Vorrichtung zur Montagehilfe, beispielsweise an einem Anbauteil etc., erreicht und somit eine schnelle Montage, beispielsweise an einem Fahrzeug etc., gewährleistet werden, da sich das bzw. die Verbindungsmittel bei der Befestigung bzw. Fixierung der Vorrichtung in einfacher Weise in entsprechend dafür bereitgestellten Aufnahmebohrungen des bzw. der Anbauteile verhaken kann bzw. können. Weiterhin ist bei flexiblen Verbindungsmitteln die Gefahr einer Beschädigung, insbesondere Abbrechen, beim Zusammenstecken deutlich reduziert. Des Weiteren ist die Herstellung einer Vorrichtung mit solchen Verbindungsmittel besonders einfach und somit kostengünstig möglich.

Nach einer weiteren bevorzugten Ausführungsform der Erfindung ist das wenigstens eine Verbindungsmittel mittels eines Stabilisierungsmittels verstärkt. Besonders bevorzugt ist das Stabilisierungsmittel eine Schraube. Auf diese Weise wird die Gefahr eines Abscherens eines Verbindungsmittels sowohl bei der Montage als auch der Demontage dauerhaft verhindert, da das Verbindungsmittel durch das Stabilisierungsmittel, beispielsweise durch eine, in das Verbindungsmittel eingeschraubte Schraube etc., dauerhaft die nötige Festigkeit bzw. Stabilität erhält und gleichzeitig die vorteilhaften flexiblen Eigenschaften zur schnellen und sicheren Fixierung beibehält. Schrauben als Stabilisierungsmittel sind hierfür besonders gut geeignet, da deren Einsatz besonders einfach und somit vorteilhaft ist. Besonders bevorzugt ist der Einsatz von Senkschrauben, da diese vollständig in der Vorrichtung versenkt werden können und somit kein, für eine Montage störender, Überstand entsteht bzw. verbleibt. Selbstverständlich sind neben Schrauben auch alle möglichen weiteren sinnvollen Stabilisierungsmittel möglich und von der erfinderischen Lösung umfasst.

Nach einer besonders bevorzugten Ausführungsform der Erfindung ist die Vorrichtung aus Kunststoff herstellbar. Eine Herstellung der erfindungsgemäßen Vorrichtung aus Kunstoff, insbesondere mittels eines entsprechenden Spritzguss- oder 3D-Druck-Verfahrens etc., ist besonders kostengünstig, insbesondere im Vergleich zu gekanteten, metallischen Käfigen.

Darüber hinaus ist eine Vorrichtung, die aus Kunststoff hergestellt ist bzw. besteht, für den Einsatz im korrosiven Außenbereich besonders geeignet, da bei Kunststoffen das, bei Metallen auftretende Problem der Kontaktkorrosion aufgrund der elektro-chemischen Spannungsreihe nicht auftritt und somit aufwändige Schutzmaßnahmen vor Kontaktkorrosion bei einer solchen erfindungsgemäßen Vorrichtung vorteilhafterweise wegfallen.

Nach einer weiteren bevorzugten Ausführungsform der Erfindung weist die Vorrichtung wenigstens ein erstes Befestigungsmittel auf, wobei das wenigstens erste Befestigungsmittel in die Öffnung der Vorrichtung eingeschoben und wenigstens mittels der Begrenzung des ersten Bereichs der Öffnung in der Öffnung der Vorrichtung fixiert ist. Dies ist neben den oben bereits genannten Vorteilen der erfindungsgemäßen Vorrichtung besonders vorteilhaft, da auf diese Weise nur ein einziges, zusammengefügtes Teil, bestehend aus Vorrichtung zur Montagehilfe und einem erstem Befestigungsmittel, bei der Montage zur Verfügung steht und somit leichter bzw. einfacher verwendet werden kann.

Besonders bevorzugt ist das wenigstens erste Befestigungsmittel im eingeschobenen und fixierten Zustand in der Öffnung senkrecht zur Einschubrichtung verschiebbar. Auf diese Weise hat das Befestigungsmittel, beispielsweise eine Mutter etc., ein Spiel, wodurch somit Toleranzen des Anbauteils bei der Montage, beispielsweise an einem Fahrzeug etc., ausgeglichen werden können und das Befestigungsmittel weiterhin und gleichzeitig stabil von bzw. in der Vorrichtung gehalten wird.

Nach einer weiteren bevorzugten Ausführungsform der Erfindung bildet ein Ende des wenigstens ersten Befestigungsmittels wenigstens im vollständig eingeschobenen und fixierten Zustand des wenigstens ersten Befestigungsmittels in der Öffnung mit der zweiten Seite der Vorrichtung im Wesentlichen eine gemeinsame Ebene. Besonders bevorzugt ist das wenigstens erste Befestigungsmittel eine Mutter mit Flansch. Auf diese Weise befindet sich das entsprechende Befestigungsmittel nicht nur vollständig in der Öffnung und somit innerhalb der Vorrichtung, wodurch kein, für eine Montage störender Überstand entsteht bzw. verbleibt, sondern bildet durch den planen Abschluss mit der entsprechenden Seite der Vorrichtung eine vergrößerte Auflageebene. Somit wird eine deutlich vergrößerte Kontaktfläche bzw. Auflagefläche der Vorrichtung auf dem entsprechenden Anbauteil und demzufolge auch eine deutlich verbesserte und sichere Verbindung miteinander ermöglicht. Dies ist besonders einfach und vorteilhaft durch entsprechende Befestigungsmittel, insbesondere Muttern mit Flansch etc., realisierbar, bei denen mittels des Flansches von sich aus die vergrößerte Auflagefläche realisiert wird. Selbstverständlich sind neben Muttern mit Flansch auch alle möglichen weiteren sinnvollen Befestigungsmittel möglich und von der erfinderischen Lösung umfasst.

Ein weiterer Aspekt der vorliegenden Erfindung betrifft eine Vorrichtungsleiste mit wenigstens zwei Vorrichtungen nach einem der Ansprüche 1 bis 11, wobei die wenigstens zwei Vorrichtungen im Wesentlichen nebeneinander angeordnet und wenigstens indirekt miteinander verbunden sind. Auf diese Weise kann die Montage von längeren Anbauteilen auf einfache Weise schnell, präzise und sicher vorgenommen werden. Je nach Anforderung können dabei mehrere einzelne, erfindungsgemäße Vorrichtungen entsprechend nebeneinander, beispielsweise parallel etc., angeordnet und direkt, beispielsweise an unmittelbar nebeneinander liegenden Seiten etc., oder indirekt, mit jeweils benötigtem bzw. gewünschtem, gleichem oder unterschiedlichem Abstand dazwischen, beispielsweise über entsprechende, starre oder flexible Querverbindungen etc., bevorzugt aus Kunststoff, verbunden werden, und somit Vorrichtungsleisten zur Montagehilfe in gewünschter bzw. benötigter Anordnung und/oder Ausdehnung bzw. Länge hergestellt und bei der Montage, beispielsweise von Anbauteilen etc., eingesetzt werden.

Die vorher beschriebenen Ausführungsformen bzw. Ausprägungen der erfindungsgemäßen Vorrichtung und insbesondere deren Vorteile sind auf die genannte Vorrichtungsleiste sinngemäß übertragbar und gelten demzufolge insoweit auch für die genannte Vorrichtungsleiste mit bzw. in allen seinen Ausführungsformen bzw. Ausprägungen.

Im Weiteren werden bevorzugte Ausführungsbeispiele der Erfindung mit Bezugnahme auf die Zeichnungen näher erläutert. Es zeigen:
Fig. 1 die Skizze einer Ausführungsform einer erfindungsgemäßen Vorrichtung zur Montagehilfe mit Blick von oben,
Fig. 2 einen Querschnitt der Ausführungsform einer erfindungsgemäßen Vorrichtung zur Montagehilfe aus Figur 1 entlang der Schnittlinie A-A,
Fig. 3 einen weiteren Querschnitt der Ausführungsform einer erfindungsgemäßen Vorrichtung zur Montagehilfe aus Figur 1 entlang der Schnittlinie B-B,
Fig. 4 eine erste perspektivische Seitenansicht einer Ausführungsform einer erfindungsgemäßen Vorrichtung zur Montagehilfe mit erstem Befestigungsmittel und
Fig. 5 eine weitere perspektivische Seitenansicht der Ausführungsform einer erfindungsgemäßen Vorrichtung zur Montagehilfe mit erstem Befestigungsmittel aus Figur 4.

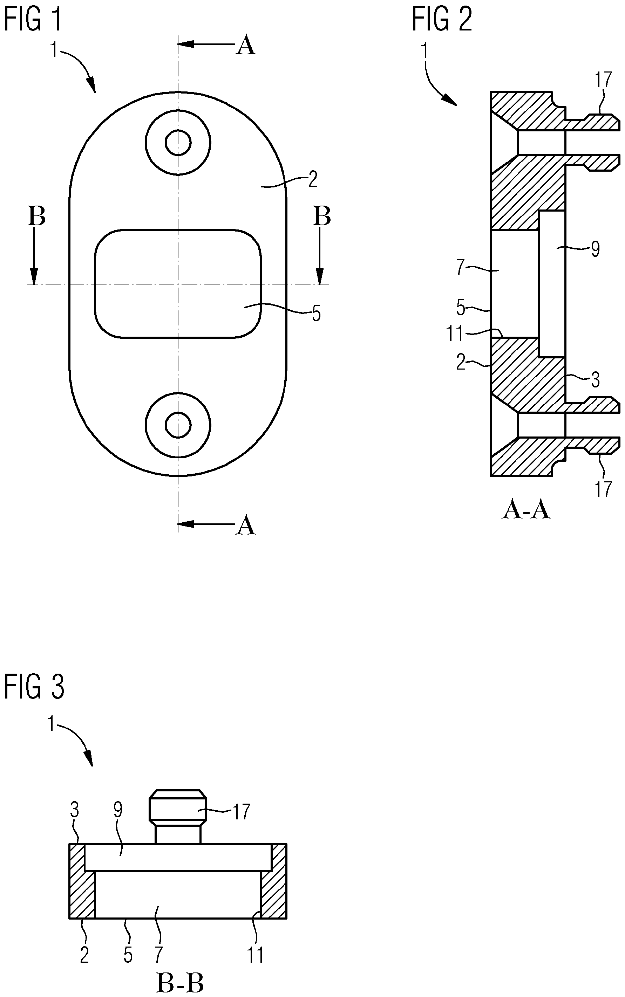

In den Figuren 1 bis 5 werden jeweils gleiche Bestandteile mit den gleichen Bezugsziffern bezeichnet, wobei die einzelnen Ausgestaltungen voneinander abweichen können. Die in den Figuren 1 bis 5 dargestellte, erfindungsgemäße Vorrichtung 1 zur Montagehilfe besteht aus Kunststoff und ist jeweils beispielsweise mittels eines 3D-Druck- oder Spritzgussverfahrens hergestellt. Sie ist deshalb im Vergleich zu gekanteten, metallischen Käfigen besonders für den Einsatz im korrosiven Außenbereich geeignet, da bei Kunststoffen das, bei Metallen auftretende Problem der Kontaktkorrosion aufgrund der elektro-chemischen Spannungsreihe nicht auftritt und somit entsprechende, aufwändige Schutzmaßnahmen vor Kontaktkorrosion überflüssig sind.

Figur 1 zeigt die Skizze einer Ausführungsform einer erfindungsgemäßen Vorrichtung 1 zur Montagehilfe mit Blick von oben. Die Vorrichtung 1 weist eine ovale Form auf, wobei in der gezeigten Darstellung nur die erste Seite 2, auch als Vorderseite bezeichnet, sichtbar ist. Die der ersten Seite bzw. Vorderseite 2 gegenüberliegende, zweite Seite 3, auch als Rückseite bezeichnet, sowie die Seiten der Vorrichtung 1 sind hier aufgrund der Darstellung nicht zu sehen. In der in Figur 1 dargestellten Vorrichtung 1 ist eine Öffnung 5 ersichtlich, die in die Zeichenebene hinein, durch die Vorrichtung1 vollständig hindurchführt. Die Öffnung 5 weist im Wesentlichen eine quasi achteckige Form auf, welche in einer rechteckigen Grundform ausgeführt ist, deren Ecken abgerundet sind. Die Öffnung 5 befindet sich zentriert auf der Vorderseite 2 und damit auch bezüglich bzw. in der Vorrichtung 1 insgesamt. Entlang der Schnittlinie A-A (für die Beschreibung des Querschnitts entlang dieser Schnittlinie siehe Figur 2) ist auf jeder Seite der Öffnung 5, jeweils symmetrisch bezüglich der Öffnung 5, jeweils ein Bohrloch angeordnet, welches jeweils ebenfalls durch die Vorrichtung 1 hindurchdurchführt und am, hier nicht zu sehenden, anderen Ende jeweils in einem Verbindungsmittel 17 endet (die Verbindungsmittel 17 sind in den folgenden Figuren 2 bis 5 zu sehen und dort näher beschrieben). Jedes Bohrloch dient zur Aufnahme eines Stabilisierungsmittels 20, welches für eine Verstärkung der Verbindungsmittel 17 vorgesehen ist, um dauerhaft die nötige Festigkeit bzw. Stabilität der Verbindungsmittel 17 herzustellen, damit die Gefahr eines Abscherens eines der Verbindungsmittel 17 sowohl bei der Montage als auch der Demontage von Anbauteilen, beispielsweise an ein Fahrzeug etc., dauerhaft verhindert werden kann. Die in der gezeigten Darstellung in Figur 1 hierfür vorgesehenen, selbst aber nicht dargestellten Stabilisierungsmittel 20 sind bevorzugt Senkschrauben, da diese vollständig in den Bohrlöchern und somit in der Vorrichtung 1 versenkt werden können, bzw. verschwinden und demzufolge kein, für eine Montage störender Überstand auf der Vorderseite 2 der Vorrichtung 1 entsteht bzw. verbleibt. Ein Querschnitt entlang der weiteren Schnittlinie B-B ist in Figur 3 dargestellt und dort beschrieben.

Figur 2 zeigt einen Querschnitt der Ausführungsform einer erfindungsgemäßen Vorrichtung 1 zur Montagehilfe aus Figur 1 entlang der Schnittlinie A-A. Die Vorrichtung 1 weist, wie dargestellt, die Vorderseite 2, sowie die gegenüberliegende Rückseite 3 auf, wobei sich der Korpus der Vorrichtung 1 dazwischen befindet. Des Weiteren sind die beiden Bohrungen zu sehen, die jeweils in einem Verbindungsmittel 17 enden und zur Aufnahme von Senkschrauben als Stabilisierungsmittel 20 (aus Übersichtlichkeitsgründen hier nicht dargestellt) für die beiden Verbindungsmittel 17 vorgesehen sind. Die Verbindungsmittel 17 sind hier als Steckverbindung ausgeführt, die jeweils ein flexibles Füßchen aufweisen, welche sich bei der Befestigung bzw. Fixierung der Vorrichtung 1, also beim Zusammenstecken von Vorrichtung 1 und beispielsweise einem Anbauteil etc., in entsprechend dafür bereitgestellten Aufnahmebohrungen des bzw. der Anbauteile in einfacher Weise verhaken, wodurch die Vorrichtung 1 sehr leicht an der zur Montage vorgesehenen Stelle, vor der eigentlichen Montage des Anbauteils an einem Fahrzeug etc., an dem Anbauteil etc., fixiert werden kann. Durch die Verwendung der Senkschrauben als Stabilisierungsmittel 20, die bis in die Füßchen der Verbindungsmittel 17 hinein-, aber nicht hindurchgeschraubt werden, wird, wie oben bereits beschrieben, die notwendige Festigkeit bzw. Stabilität gewährleistet, um die Gefahr eines Abscherens eines der Verbindungsmittel 17 sowohl bei der Montage als auch der Demontage von entsprechenden Anbauteilen dauerhaft zu verhindern.

Des Weiteren ist in der Figur 2 die, durch die Vorrichtung 1 hindurchgehende Öffnung 5 dargestellt, die aus dem ersten Bereich 7 mit der Begrenzung 11 zum Korpus der Vorrichtung 1 und dem zweiten Bereich 9 besteht. Wie ersichtlich, geht der zweite Bereich 9 über den ersten Bereich 7 hinaus, sodass ein entsprechend ausgestaltetes erstes Befestigungsmittel 15 (aus Übersichtlichkeitsgründen hier nicht dargestellt), welches aus Richtung der Rückseite 3 in die Öffnung 5 eingeschoben wird, maximal bis zur Grenze des ersten Bereichs 7 und des zweiten Bereichs 9 eingeschoben werden kann und dort am überstehenden Teil des Korpus der Vorrichtung 1 anstößt bzw. anliegt. Ein solches, entsprechend ausgeführtes bzw. vorgesehenes erstes Befestigungsmittel 15 befindet sich spätestens nach dem vollständigen Einschieben, also nach dem Anschlag eines Teils des ersten Befestigungsmittels 15 am überstehenden Teil des Korpus der Vorrichtung 1, mit einem Teil im ersten Bereich 7 und mit dem anderen Teil im zweiten Bereich 9 der Öffnung 5 der Vorrichtung 1. Durch eine entsprechend geometrisch aufeinander abgestimmte Ausführung, hier der Begrenzung 11 des ersten Bereichs 7 der Öffnung 5 der Vorrichtung 1, zumindest mit dem Teil des ersten Befestigungsmittels, der sich nach dem Einschieben im ersten Bereich 7 der Öffnung 5 befindet, wird das erste Befestigungsmittel 15 nach dem Einschieben dann mittels des unmittelbaren Kontakts mit der Begrenzung 11 des ersten Bereichs 7 der Öffnung 5 der Vorrichtung 1 von dieser im Wesentlichen mittels Kraftschluss durch Haftreibung ohne weitere Hilfsmittel in der Vorrichtung 1 gehalten bzw. fixiert.

Figur 3 zeigt einen weiteren Querschnitt der Ausführungsform einer erfindungsgemäßen Vorrichtung 1 zur Montagehilfe aus Figur 1 entlang der Schnittlinie B-B. Auch in diesem Querschnitt sind die Vorderseite 2 und die Rückseite 3 mit dem dazwischenliegenden Korpus der Vorrichtung 1 dargestellt. Figur 3 zeigt ebenfalls die, durch die Vorrichtung 1 hindurchgehende Öffnung 5 mit dem ersten Bereich 7 und dessen Begrenzung 11 und mit dem zweiten Bereich 9, der über den ersten Bereich 7 hinaus geht. Des Weiteren ist in der Figur 3 noch eines der beiden, als flexible Steckverbindung ausgeführten Verbindungsmittel 17 von der Seite zu sehen.

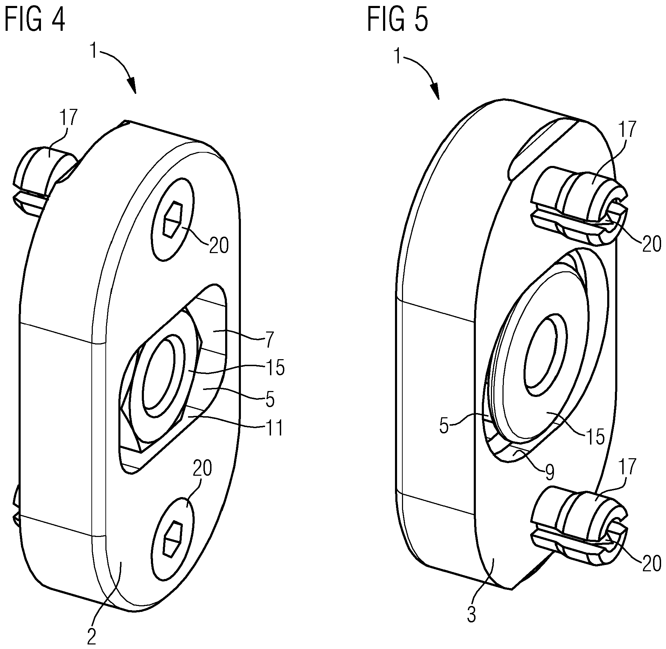

Fig. 4 zeigt eine erste perspektivische Seitenansicht einer Ausführungsform einer erfindungsgemäßen Vorrichtung 1 zur Montagehilfe mit erstem Befestigungsmittel 15 mit Blick auf die Vorderseite 2. Aus dieser Perspektive ist nur eines der beiden Verbindungsmittel 17, die auf der Rückseite 3 angeordnet sind, zu sehen. Beide Verbindungsmittel 17 sind auf die gleiche Weise wie in den Figuren 1 bis 3 beschrieben ausgeführt.

In der gezeigten Ausführungsform der Vorrichtung 1 sind die als Senkschrauben ausgeführten Stabilisierungsmittel 20 vollständig, ohne für eine Montage störenden Überstand, in den entsprechenden Bohrlöchern der Vorrichtung 1 eingeschraubt und sorgen somit für die dauerhafte Festigkeit bzw. Stabilität der Verbindungsmittel 17 gegen die Gefahr eines Abscherens eines der Verbindungsmittel 17 sowohl bei der Montage als auch der Demontage von entsprechenden Anbauteilen.

In der vorliegenden Darstellung ist wiederum die Öffnung 5, allerdings nur der erste Bereich 7 und dessen Begrenzung 11 zum Korpus der Vorrichtung 1, zu sehen, in die das erste Befestigungsmittel 15, hier als Sechskant-Mutter mit Flansch (der Flansch ist in dieser Darstellung nicht zu sehen) ausgeführt, bereits eingeschoben ist. Die Begrenzung 11 des ersten Bereichs 7 der Öffnung 5 ist im Wesentlichen aus einer rechteckigen Grundform, deren Ecken abgerundet sind, als quasi achteckige Form ausgeführt. Durch die entsprechende geometrische Anpassung wird die Sechskant-Mutter 15 in der gezeigten Ausführungsform der erfindungsgemäßen Vorrichtung 1 mittels des unmittelbaren Kontakts mit den zwei parallelen, quer zur Längsausdehnung der Vorrichtung 1, Seiten der Begrenzung 11 des ersten Bereichs 7 der Öffnung 5 der Vorrichtung 1 im Wesentlichen mittels Kraftschluss durch Haftreibung ohne weitere Hilfsmittel in der Vorrichtung 1 gehalten bzw. fixiert.

Die Sechskant-Mutter 15 hat in der vorliegenden Ausführungsform der Vorrichtung 1 dennoch im vorliegenden, bereits eingeschobenen und fixierten Zustand in der Öffnung 5 vorteilhafterweise etwas Spiel, im Wesentlichen begrenzt durch die Ausmaße der Öffnung 5, senkrecht zur Einschubrichtung. Somit ist die Sechskant-Mutter 15 entlang der zwei parallelen, quer zur Längsausdehnung der Vorrichtung 1 gerichteten Seiten der Begrenzung 11 des ersten Bereichs 7 der Öffnung 5 in geringem Maß verschiebbar, wodurch demzufolge Toleranzen des bzw. der entsprechenden Anbauteile bei der Montage bzw. Zusammenbau, beispielsweise an einem Fahrzeug etc., ausgeglichen werden können, ohne dass deren stabile Fixierung in der Vorrichtung 1 beeinträchtigt wird.

Zur Montage eines bzw. mehrerer Anbauteile, beispielsweise an einem Fahrzeug etc., wird die erfindungsgemäße Vorrichtung 1 vor der eigentlichen Montage zunächst auf der, bei bzw. nach der Montage unzugänglichen Seite des Anbauteils angebracht und hält somit die Sechskant-Mutter 15 bei der Montage der betreffenden Anbauteile in der jeweils benötigten bzw. vorgesehenen Einbaulage an dem beispielsweise betreffendem Fahrzeug. Dies ist bei einer ggf. erforderlichen Demontage genauso. Dazu ist es erforderlich, dass das erste Befestigungsmittel, die Sechskant-Mutter 15 vorher bzw. in einer frühen Montagephase, bei der die Vorrichtung 1 bzw. das betreffende Anbauteil noch von beiden Seiten zugänglich ist, in die Vorrichtung 1 eingeschoben wird. Bei der eigentlichen Montage kann dann die Verbindung, insbesondere Verschraubung, des bzw. der Anbauteile an der bzw. den, dafür vorgesehenen Stelle(n) des beispielsweise betreffenden Fahrzeugs etc., mittels eines, zur Sechskant- Mutter 15 komplementären zweiten Befestigungsmittels, nämlich einer dazu passenden Schraube problemlos hergestellt bzw. ermöglicht werden, ohne insbesondere durch das Festziehen der Verschraubung irrtümlich eine zulässige Flächenpressung zu überschreiten, wodurch somit auch ein, dadurch als Folge möglicherweise verursachtes Lösen der Schraubverbindung sicher vermieden werden kann.

Figur 5 zeigt eine weitere perspektivische Seitenansicht der Ausführungsform einer erfindungsgemäßen Vorrichtung 1 zur Montagehilfe mit erstem Befestigungsmittel 15 aus Figur 4 mit Blick auf die Rückseite 3. Die vorliegende Darstellung gemäß Figur 5 zeigt beide Verbindungsmittel 17, in denen zur dauerhaften Erhöhung von deren Festigkeit bzw. Stabilität, wie oben im Einzelnen bereits beschrieben, jeweils die als Senkschrauben ausgeführten Stabilisierungsmittel 20 eingeschraubt und deren Enden in den Verbindungsmitteln 17 zu sehen sind.

In der vorliegenden Darstellung ist wiederum die Öffnung 5, allerdings hier nur der zweite Bereich 9 mit der, wie in Figur 4 beschrieben, bereits eingeschobenen Sechskant-Mutter mit Flansch 15, zu sehen, wobei hier im Wesentlichen nur die Unterseite des Flansches der Sechskant-Mutter 15 sichtbar ist. Wie aus der Darstellung ersichtlich, geht der zweite Bereich 9 über den ersten Bereich 7 der Öffnung 5 hinaus, sodass die bereits aus Richtung der Rückseite 3 eingeschobene Sechskant-Mutter 15 bis zur Grenze des ersten Bereichs 7 vollständig eingeschoben ist und am überstehenden Teil des Korpus der Vorrichtung 1 anstößt bzw. anliegt. Die Sechskant-Mutter 15 selbst befindet sich dabei in fixiertem Zustand im ersten Bereich 7 und der Flansch der Sechskant-Mutter 15 im zweiten Bereich 9 der Öffnung 5 der Vorrichtung 1. Dabei ist der Flansch der Sechskant-Mutter 15 vollständig innerhalb des zweiten Bereichs 9 der Öffnung 5 und bildet mit seiner Unterseite zusammen mit der Rückseite 3 der Vorrichtung 1 im Wesentlichen eine gemeinsame Ebene. Durch den planen Abschluss der Sechskant-Mutter 15 bzw. deren Flansch mit der Rückseite 3 der Vorrichtung 1 ergibt sich zwanglos eine vergrößerte Auflageebene der Vorrichtung 1, die wiederum somit vorteilhafterweise eine deutlich vergrößerte Kontaktfläche bzw. Auflagefläche der Vorrichtung 1 auf dem bzw. den entsprechenden Anbauteilen und somit auch eine deutlich verbesserte und sichere Verbindung miteinander ermöglicht.

Die Erfindung ist weiterhin in keiner Weise auf die, in den Figuren 1 bis 5 beschriebenen und gezeigten Ausführungsformen beschränkt. Vielmehr sind auch alle möglichen weiteren, sinnvollen Ausführungsformen der Erfindung, beispielsweise Vorrichtungen mit Öffnungen, die abweichend zu der gezeigten Öffnung 5 ausgeführt sind, um andere erste Befestigungsmittel aufzunehmen etc., mit umfasst.

*Unabhängig vom grammatikalischen Geschlecht eines bestimmten Begriffes sind Personen mit männlicher, weiblicher oder anderer Geschlechteridentität ggf. mit umfasst.*

## Patentansprüche

1. Vorrichtung (1) mit wenigstens einer ersten (2) und einer, der ersten Seite (2) gegenüberliegenden zweiten (3) Seite und wenigstens einer, zwischen der ersten (2) und der zweiten (3) Seite durchgehenden Öffnung (5) zur Aufnahme wenigstens eines ersten Befestigungsmittels (15),
**dadurch gekennzeichnet, dass**
die wenigstens eine Öffnung (5) wenigstens einen ersten (7) und einen daran angrenzenden zweiten (9) Bereich aufweist, die derart ausgeführt sind, dass das wenigstens erste Befestigungsmittel (15) maximal bis zur Grenze der wenigstens zwei Bereiche (7, 9) in die wenigstens eine Öffnung (5) der Vorrichtung (1) einschiebbar ist, wobei sich das wenigstens erste Befestigungsmittel (15) wenigstens nach dem vollständigen Einschieben teilweise im ersten Bereich (7) und teilweise im zweiten Bereich (9) der Öffnung (5) befindet und wobei das wenigstens erste Befestigungsmittel (15) wenigstens mittels der Begrenzung (11) des ersten Bereichs (7) der Öffnung (5) in der Öffnung (5) der Vorrichtung (1) fixierbar ist.

2. Vorrichtung nach Anspruch 1,
**dadurch gekennzeichnet, dass**
die Vorrichtung (1) wenigstens ein Verbindungsmittel (17) aufweist.

3. Vorrichtung nach Anspruch 2,
**dadurch gekennzeichnet, dass**
das wenigstens eine Verbindungsmittel (17) flexibel ist.

4. Vorrichtung nach Anspruch 2 oder 3,
**dadurch gekennzeichnet, dass**
das wenigstens eine Verbindungsmittel (17) eine Steckverbindung ist.

5. Vorrichtung nach einem der Ansprüche 2 bis 4,
**dadurch gekennzeichnet, dass**
das wenigstens eine Verbindungsmittel (17) mittels eines Stabilisisierungsmittels (20) verstärkt ist.

6. Vorrichtung nach Anspruch 5,
**dadurch gekennzeichnet, dass**
das Stabilisierungsmittel (20) eine Schraube ist.

7. Vorrichtung nach einem der vorherigen Ansprüche,
**dadurch gekennzeichnet, dass**
die Vorrichtung (1) aus Kunststoff herstellbar ist.

8. Vorrichtung nach einem der vorherigen Ansprüche
**dadurch gekennzeichnet, dass**
die Vorrichtung (1) wenigstens ein erstes Befestigungsmittel (15) aufweist, wobei das wenigstens erste Befestigungsmittel (15) in die Öffnung (5) der Vorrichtung (1) eingeschoben und wenigstens mittels der Begrenzung (11) des ersten Bereichs (7) der Öffnung (5) in der Öffnung (5) der Vorrichtung (1) fixiert ist.

9. Vorrichtung nach Anspruch 8,
**dadurch gekennzeichnet, dass**
das wenigstens erste Befestigungsmittel (15) im eingeschobenen und fixierten Zustand in der Öffnung (5) im Wesentlichen senkrecht zur Einschubrichtung verschiebbar ist.

10. Vorrichtung nach Anspruch 8 oder 9,
**dadurch gekennzeichnet, dass**
ein Ende des wenigstens ersten Befestigungsmittels (15) wenigstens im vollständig eingeschobenen und fixierten Zustand des wenigstens ersten Befestigungsmittels (15) in der Öffnung (5) mit der zweiten Seite (3) der Vorrichtung (1) im Wesentlichen eine gemeinsame Ebene bildet.

11. Vorrichtung nach einem der Ansprüche 8 bis 10,
**dadurch gekennzeichnet, dass**
das wenigstens erste Befestigungsmittel (15) eine Mutter mit Flansch ist.

12. Vorrichtungsleiste mit wenigstens zwei Vorrichtungen (1) nach einem der Ansprüche 1 bis 11,
**dadurch gekennzeichnet, dass**
die wenigstens zwei Vorrichtungen (1) nebeneinander angeordnet und wenigstens indirekt miteinander verbunden sind.
